Europäisches Patentamt

European Patent Office

Office européen des brevets

(11) Publication number: **0 363 518 B1**

# EUROPEAN PATENT SPECIFICATION

(45) Date of publication of patent specification: **31.03.93**  (51) Int. Cl.⁵: **G01D 5/48**, G01D 5/16

(21) Application number: **88117100.3**

(22) Date of filing: **14.10.88**

(54) Distance measuring apparatus and method.

(43) Date of publication of application:
**18.04.90 Bulletin 90/16**

(45) Publication of the grant of the patent:
**31.03.93 Bulletin 93/13**

(84) Designated Contracting States:
**DE FR GB**

(56) References cited:
**GB-A- 2 016 694**

**ELECTRONIC COMPONENTS & APPLICA-TIONS, vol. 5, no. 3, June 1983, pages 148-153, Eindhoven, NL; U. DIBBERN et al.: "The magnetoresistive sensor - a sensitive device for detecting magnetic field variations"**

**IEEE TRANSACTIONS ON MAGNETICS, vol. MAG-16, no. 5, September 1980, pages 693-694, IEEE, New York, US; T.K. WORTHING-TON et al.: "A magnetoacoustic position sensor"**

**PATENT ABSTRACTS OF JAPAN, vol. 9, no. 262 (P-398)[1985], 19th October 1985; & JP-A-60 111 917 (HITACHI SEISAKUSHO K.K.) 18-06-1985**

**VALVO, Technische Information, 840323, Februar 1984, Hamburg (DE)**

(73) Proprietor: **ROBERT BOSCH GMBH
Postfach 30 02 20
W-7000 Stuttgart 30(DE)**

(72) Inventor: **Gerlach, Günter
Fliederweg 8
W-7550 Rastatt(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 363 518 B1

## Description

This invention relates to apparatus for measurement of distances. It is particularly applicable to very accurate measurements, for example of the travel of a moving part of a machine.

It is often necessary to be able to measure very exactly (to an accuracy of less than 10 $\mu$m) the position of, for example, a piston of an operating cylinder, or of the tool head of a machine tool. The movement may be up to 2 metres. Various methods of doing this are known.

Commonly, a graduated glass rod is used with optical read-off means. Divisions are at 40 $\mu$m intervals and the resolution is 10 $\mu$m. But the rods are very expensive, easily broken, and become dirty. In addition, the tolerance to relative movement perpendicularly between glass rod and sensor means is low ( $\pm$ 3/10 mm) and this can be a practical difficulty.

Laser interferometers are very accurate but too expensive for such applications.

A further known method involves the use of a magnetic strip mounted on the bed of the machine and a position magnet on the movable part which defines its current position by altering the magnetic properties of the strip at that point. If a magnetic pulse (magnetostrictive vibration wave) is injected by a coil or a magnetic head at one end of the strip, an electrical pulse is generated in a coil extending along and around the strip at the moment the magnetic pulse reaches the position with altered magnetic properties. By timing the occurrence of this electrical pulse, a measure of the distance by the magnetic pulse is obtained.

From "Electronic Components & Applications, Vol. 5, 1983, No. 3, pp. 148-153" a magnetoresistive sensor (MRS) for measuring linear or angular displacements is known, with four permalloy strips, arranged in a meander pattern on a silicone substrate and connected to form a Wheatstone bridge configuration. Small movements of the sensor will cause a variation of a magnetic field and this will change the resistance of the permalloy strips.

This change of the resistances leads to a bridge imbalance, the degree of bridge imbalance is used to indicate the variation in magnetic field normal to the permalloy strips and therefore is used, to indicate the position of the sensor.

To linearize the device characteristic, a set-up, known as a "barber-pole" configuration is used for the permalloy strips. To compensate the temperature dependence of the configuration, in a drive circuitry, a negative-impedance converter (NIC) provides a temperature dependent voltage source for the bridge.

The GB-A-2 016 694 shows a position detecting device with a magnetostrictive wire or rod, with an exciting means for generating an ultrasonic signal and two receiving means at both ends for receiving the ultrasonic signal, generated in the magnetostrictive wire or rod or the reflected signal, where the exciting means is movable in accordance with a displacement.

By measuring the two times between generating and receiving the signals, the position exciting means is detected. To avoid temperature effects, the magnetostrictive wire or rod is composed of such a material in which a variation of the propagation velocity resulting from temperature is merely little.

The "IEEE Transactions on Magnetics, Vol. MAG-16, Sept 1980, No. 5, pp. 693-694", describes a magnetoacoustic position sensor with an acoustic medium which consists of a material with high magnetostriction. The position is sensed by measuring the time for a torsional acoustic pulse to propagate from a moving multigap ferrite head to fixed sense coils at either end of the wire.

The analysis of the dates obtained takes place in a microprocessor, problems with thermal expansion are solved by giving temperature information to the microprocessor.

An arrangement for compensating the temperature dependence of the magnetostrictive propagation speed for a position sensor is known from "Patent Abstracts of Japan JP-A-60 111 917". In this arrangement the magnetostriction signals are avaluated in a first circuit for measuring propagation time and in a second circuit for calculating the temperature of the system. The calculated temperature serves for compensating the temperature dependence of the magnetostrictive propagation speed.

The present invention aims to provide an improved and/or cheaper apparatus of measuring distance.

Accordingly, the present invention proposes an apparatus for measuring distance as set out in claims 1 and 2, respectively.

The distance is derived from the product of the measured time t and the known velocity v. The latter however is variable with temperature, so it is further possible to adopt a strategy to compensate for temperature. This involves the use of either two coils or two sensors at opposite ends of the strip, with respectively one sensor or one coil movable along the strip. By measuring the times t1, t2 or the pulse to travel from the movable sensor/coil to each of the coils/sensors, a formula can be used to relate these times to the reference length of the strip between the two coils/sensors, giving the required distance independently of temperature.

In order that the invention shall be clearly understood, several exemplary embodiments will now be described with reference to the accompanying drawings, in which:

Fig.1 illustrates the simplest form of the invention using one coil and one sensor;

Fig.2 shows a block circuit diagram; and

Fig.3 shows an apparatus using two fixed sensors and one movable injection coil.

The sensor used in this invention is called a 'Barberpole' element, and derives its name from the diagonal metallic stripes formed on a narrow permalloy strip. A permalloy strip included in an electrical circuit has a certain resistance; if subjected to a magnetic field the resistance changes. The (magnetoresistive effect). The metallic stripes of the element improve and linearise the effect. Such an element can detect the passage of a magnetic pulse through a magnetic medium if the magnetic field of the pulse embraces the element.

An even more definite and quantifiable effect is obtained if four such 'barberpole' elements are connected in a bridge circuit. The principles of such sensors is described fully in the Technical Information Leaflet No. 840323 of Valvo (Unternehmungsbereich Bauelemente der Philips GmbH, Hamburg), Febr, 1984.

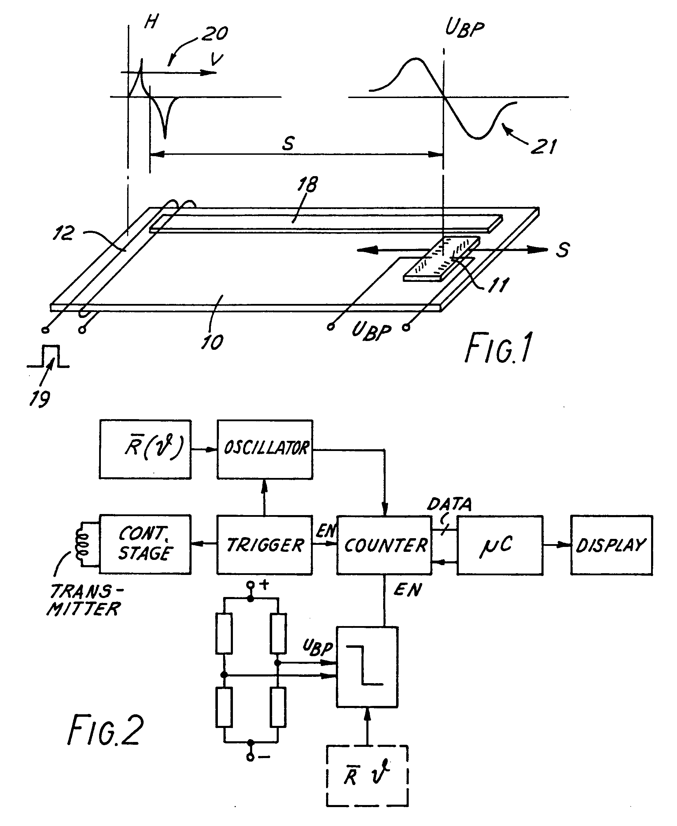

As seen in Figure 1, an amorphous metal (permalloy) strip 10 is fixed to the bed of the machine of which the movable member e.g. a piston (not shown), is to have its position monitored. Attached to the piston is a barberpole bridge 11. The strip 10 is long enough that the barberpole bridge 11 remains in association with it over its full path of movement, illustrated by the arrows. At one end, the strip 10 has a pulse injection coil 12.

A voltage pulse 19 is applied to the injection coil 12. This produces a sudden magneto-accoustic pulse 20 in the strip 10 which propagates along the latter at a speed V.

Once the pulse reaches the barberpole bridge 11, a voltage reversal 21 appears across its terminals, The time elapsed t between 20 and 21 is proportional to the distance S between coil 12 and bridge 11.

However, as pointed out at the start, a change of temperature reduces the accuracy of this measurement, and it is an advantage to compensate for this.

For this purpose it is necessary to know the temperature, and therefore a serpentine temperature sensor 18 may be deposited along the strip 10 as a thin film. This allows determination of the mean temperature, and thus calculation of the temperature expansion of the strip 10. From this, corrected value of s can be calculated allowing for the expansion.

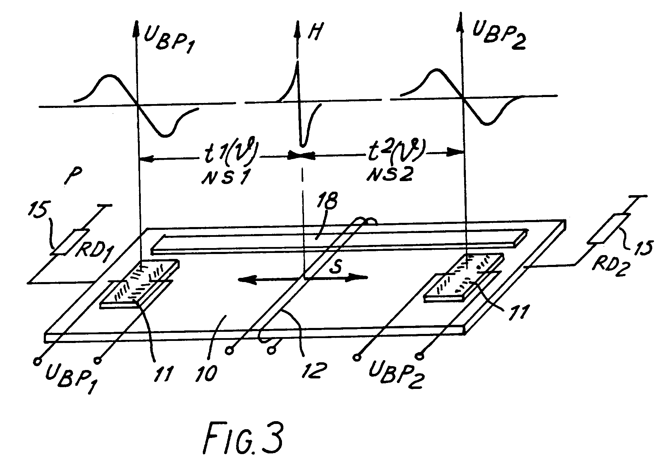

An alternative solution to this problem is illustrated in Fig.3. The apparatus is similar to Fig.1, but in this case it is the injection coil 12 which moves with the piston and two barberpole bridges 11 are fixed to the strip 10. The injection coil 12 is shown as wound around the strip 10, but for it to be movable it must in practice be wound on a core attached to the piston. Further, the strip is terminated at each end with its characteristic impedance 15. This is to eliminate reflections of the magneto-acoustic pulse when it reaches the end of the strip.

The calculation of the distance S1 of the coil 12 from one end of the strip is then undertaken as follows: The total (known) length S has an extension of $\Delta S(\vartheta)$ at temperature $\vartheta°$, made up of the extension $\Delta S1(\vartheta)$ of S1 to the left of the coil 12, and $\Delta S2(\vartheta)$ of S2 to the right.

When a pulse is initiated in injection coil 12, it requires the times t1 and t2 measured as in Fig.1 to travel the distances S1 and S2 to the respective ends of the strip 10. These times are in reality of magnitude $t1 + \Delta t1(\vartheta)$ and $t2 + \Delta t2(\vartheta)$. The measurements are then employed as follows.

The temperature extension is:

$$\Delta S\vartheta = [S1(\vartheta) + S2(\vartheta)] - S \qquad (1)$$

Moreover:

$$S1(\theta) = S1 + S1 \cdot \frac{\Delta S(\vartheta)}{S} \qquad (2)$$

3

Solved for S1 :

$$S1 \quad = \quad \frac{S1(\vartheta)}{1 + \frac{\Delta s(\vartheta)}{s}} \qquad (3)$$

Inserting (1) in (3)

$$S1 \quad = \quad \frac{S1(\vartheta)}{S1(\vartheta)+S2(\vartheta)} \cdot S \sim \frac{t1(\vartheta)}{t1(\vartheta) + t2(\vartheta)} \cdot S \qquad (4)$$

Thus, measurement of the actual values of $t1(\vartheta)$ and $t2(\vartheta)$, without discrimination as to the value of $t1(\vartheta)$ or $t2(\vartheta)$ gives an exact value of $s1$ from equation (4), S being known. There is thus no need to know the pulse velocity V, or its corrected value $V(\vartheta)$ at temperature °.

There are various alternative arrangements possible since the coil and the barberpole bridge are in effect interchangeable. Further, if the arrangement of Fig.1 is adopted, a reflected wave may be employed derived from a single pulse to give times t1 (as already described) and t1 + 2t2 for the pulse reflected from the far end of the strip. Equation 4 is then used as for Fig.3 .

In order to take account of the value of $\theta$, in calculating s by the simplest method, the serpentine temperature sensor 18 may be used to provide the value of $\vartheta$ .

Figure 2 illustrates a block diagram of a circuit suitable to provide a display reading the distance s directly.

**Claims**

1. Apparatus for measuring distance comprising a magnetic strip (10), a pulse injection coil (12) for injecting magnetic pulses and a sensor (11) both in operative association with the magnetic strip (10), one of the coil (12) or the sensor (11) being fixed relative to the strip (10) and the other being movable along the strip (10), a transmitter for pulsing the injection coil (12) and means for measuring the period t1 for a pulse to travel from the coil (12) to the sensor (11) so as to calculate the distance (s) between them by evaluating the period t1 characterised in, that the sensor (11) is a "barberpole magnetoresistive sensor" and that in addition the period 2 t2 for a magnetic pulse to travel along the remaining distance along the strip (10) and back again after reflecting from an end thereof is measured and that the magnetic strip (10) carries means (18) to measure the mean temperature along its length.

2. Apparatus for measuring distance comprising a magnetic strip (10), a pulse injection coil (12) for injecting magnetic pulses and a sensor (11) both in operative association with the magnetic strip (10), one of the coil (12) or the sensor (11) being fixed relative to the strip (10) and the other being movable along the strip (10), a transmitter for pulsing the injection coil (12) and means for measuring the period t1 for a pulse to travel from the coil (12) to the sensor (11) so as to calculate the distance (s) between them by evaluating the period t1 characterised in, that the sensor (11) is a "barberpole magnetoresistive sensor" and that in addition a further coil or sensor (11) is provided to allow measurement of t1 and t2 from the coil or sensor (11) movable along the strip (10) to the coils or sensors (11) fixed at the end of the strip (10) and that the magnetic strip (10) carries means (18) to measure the mean temperature along its length.

3. Apparatus as claimed in claim 1 or 2, wherein said means (18) comprises a serpentine conductive resistor having a high temperature coefficient of resistance from which said temperature can be measured.

4

**Patentansprüche**

1. Vorrichtung zur Entfernungsmessung, umfassend einen Magnetstreifen (10), eine Impuls-Einspeisungsspule (12) zum Einspeisen von magnetischen Impulsen, und einen Sensor (11), die beide mit dem Magnetstreifen (10) zusammenwirken, wobei die Spule (12) oder der Sensor (11) bezüglich des Streifens (10) fest ist und das andere Teil entlang dem Streifen (10) beweglich ist, einen Sender zur Impulsansteuerung der Einspeisungsspule (12) und Mittel zum Messen der Zeit t1, die einen Impuls für den Weg von der Spule (12) zu dem Sensor (11) braucht, um daraus die Entfernung (s) zwischen diesen beiden durch Auswerten der Zeit t1 zu berechnen, dadurch gekennzeichnet, daß der Sensor (11) ein "Barberpole"-Magnetoresistiver Sensor ist, daß zusätzlich die Zeit 2 t2 gemessen wird, die ein magnetischer Impuls zum Durchlaufen der Reststrecke des Streifens (10) und zurück nach der Reflexion an einem Ende desselben braucht, und der Magnetstreifen (10) Mittel (18) zum Messen der mittleren Temperatur über seine Länge hin trägt.

2. Vorrichtung zur Entfernungsmessung, umfassend einen Magnetstreifen (10), eine Impuls-Einspeisungsspule (12) zum Einspeisen von magnetischen Impulsen, und einen Sensor (11), die beide mit dem Magnetstreifen (10) zusammenwirken, wobei die Spule (12) oder der Sensor (11) bezüglich des Streifens (10) fest ist und das andere Teil entlang dem Streifen (10) beweglich ist, einen Sender zur Impulsansteuerung der Einspeisungsspule (12) und Mittel zum Messen der Zeit t1, die einen Impuls für den Weg von der Spule (12) zu dem Sensor (11) braucht, um daraus die Entfernung (s) zwischen diesen beiden durch Auswerten der Zeit t1 zu berechnen, dadurch gekennzeichnet, daß der Sensor (11) ein"Barberpole"-Magnetoresistiver Sensor ist, daß zusätzlich eine weitere Spule oder Sensor (11) vorgesehen ist, zum Messen von t1 und t2 von der Spule oder dem Sensor (11), die/der entlang dem Streifen (10) beweglich ist, zu den Spulen oder Sensoren (11), die am Ende des Streifens 10 befestigt sind und daß der Magnetstreifen (10) Mittel (18) zum Messen der mittleren Temperatur über seine Länge hin trägt.

3. Vorrichtung nach Anspruch 1 oder 2, dadurch gekennzeichnet, daß die erwähnten Mittel (18) einen schleifenförmigen, leitfähigen Widerstand mit hohem Temperatur-Widerstandskoeffizient, anhand dessen die besagte Temperatur gemessen werden kann, umfassen.

**Revendications**

1. Dispositif de mesure de distances comprenant une bande magnétique (10), une bobine d'injection d'impulsions (12) destinée à injecter des impulsions magnétiques et un détecteur (11) associés tous deux en fonctionnement à la bande magnétique (10), l'un ou l'autre de la bobine (12) et du détecteur (11) étant fixe par rapport à la bande (10) tandis que l'autre est mobile le long de cette bande (10), un émetteur destiné à appliquer des impulsions à la bobine d'injection (12), et des moyens de mesure du temps t1 mis par une impulsion pour parcourir la distance de la bobine (12) au détecteur (11) de manière à calculer la distance (S) entre les deux par évaluation du temps t1, dispositif caractérisé en ce que le détecteur (11) est un "détecteur magnétorésistif à barber-pole" en ce que, de plus, on mesure le temps 2 t2 mis par une impulsion magnétique pour parcourir la distance restante le long de la bande (10) et revenir après s'être réfléchie à l'extrémité de la bande, et en ce que la bande magnétique (10) porte des moyens (18) de mesure de la température moyenne suivant sa longueur.

2. Dispositif de mesure de distances comprenant une bande magnétique (10), une bobine d'injection d'impulsions (12) destinée à injecter des impulsions magnétiques et un détecteur (11) tous deux associés en fonctionnement à la bande magnétique (10), l'un ou l'autre de la bobine (12) et du détecteur (11) étant fixe par rapport à la bande (10) tandis que l'autre est mobile le long de cette bande (10), un émetteur destiné à appliquer des impulsions à la bobine d'injection (12), et des moyens de mesure du temps t1 mis par une impulsion pour parcourir la distance de la bobine (12) au détecteur (11) de manière à calculer la distance (S) entre les deux par évaluation du temps t1, dispositif caractérisé en ce que le détecteur (11) est un "détecteur magnétorésistif barber-pole", en ce que, de plus, on utilise une bobine ou détecteur supplémentaire (11) pour pouvoir mesurer les temps de parcours t1 et t2 entre la bobine ou détecteur (11) mobile le long de la bande (10), et les bobines ou détecteurs (11) fixés à l'extrémité de la bande (10), et en ce que la bande magnétique (10) porte des dispositifs (18) de mesure de la température moyenne suivant sa longueur.

3. Dispositif selon l'une quelconque des revendications 1 et 2, caractérisé en ce que les dispositifs (18) sont constitués par une résistance conductrice à serpentin présentant un coefficient de résistance en température élevé permettant de mesurer la température.

FIG.1

FIG.2

FIG.3